# EUROPEAN PATENT APPLICATION

(11) **EP 4 633 072 A1**
(43) Date of publication of application: **15.10.2025**
(21) Application number: 23899892.6
(22) Date of filing: 01.12.2023
(51) Int. Cl.: H04L 1/1812

(54) **FEEDBACK INFORMATION TRANSMISSION METHOD AND APPARATUS, TERMINAL, AND NETWORK-SIDE DEVICE**

(30) Priority: 06.12.2022 CN 202211568281
(71) Applicant: Vivo Mobile Communication Co., Ltd., Dongguan, Guangdong 523863 (CN)
(72) Inventor: LI, Can, Dongguan, Guangdong 523863 (CN); LIU, Siqi, Dongguan, Guangdong 523863 (CN)
(74) Representative: Walaski, Jan Filip
(86) International application number: PCT/CN2023/135928
(87) International publication number: WO 2024/120314

(57) **Abstract**

The present application discloses a feedback information transmission method and apparatus, a terminal, and a network-side device, and belongs to the technical field of communications. The feedback information transmission method of the embodiments of the present application comprises: a terminal receiving configuration information, the configuration information being used for indicating that the terminal has been configured with at least two sets, each set comprising at least two physical units; the terminal receiving at least one piece of downlink control information (DCI), each piece of DCI being used for performing joint scheduling on at least two physical units in one of the sets with which the terminal is configured; the terminal determining the number of HARQ-ACK bits corresponding to each of the at least one piece of DCI; and according to the number of HARQ-ACK bits corresponding to each of the at least one piece of DCI, the terminal generating and sending a HARQ-ACK codebook corresponding to the at least one piece of DCI.

## Description

### CROSS-REFERENCE TO RELATED APPLICATIONS

This application claims priority to Chinese Patent Application No. 202211568281.1, filed with the China National Intellectual Property Administration on December 6, 2022 and entitled "FEEDBACK INFORMATION TRANSMISSION METHOD AND APPARATUS, TERMINAL, AND NETWORK-SIDE DEVICE", which is incorporated herein by reference in its entirety.

### TECHNICAL FIELD

This application pertains to the field of communications technologies, and specifically relates to a feedback information transmission method and apparatus, a terminal, and a network-side device.

### BACKGROUND

In the related art, to reduce signaling overheads, a feature is introduced where one DCI (Downlink Control Information, downlink control information) schedules PUSCHs (Physical Uplink Shared Channel, physical uplink shared channel) or PDSCHs (Physical Downlink Shared Channel, physical downlink shared channel) for at least two cells (cell).

However, there is no existing scheme to determine a final feedback HARQ-ACK (Hybrid Automatic Repeat request-ACKnowledgement, hybrid automatic repeat request acknowledgement) codebook in a case that cells jointly schedulable by one DCI belong to at least two sets in the related art, which consequently cannot ensure that a terminal and a network-side device have a consistent understanding on the HARQ-ACK codebook. This is not conducive to correct demodulation of the HARQ-ACK codebook by the network-side device.

### SUMMARY

Embodiments of this application provide a feedback information transmission method and apparatus, a terminal, and a network-side device, so as to determine a quantity of HARQ-ACK bits finally fed back in a case that cells jointly schedulable by one DCI belong to at least two sets.

According to a first aspect, a feedback information transmission method is provided, including:
receiving, by a terminal, configuration information, where the configuration information is used for indicating that at least two sets are configured for the terminal and each set includes at least two physical units;
receiving, by the terminal, at least one downlink control information DCI, where each of the at least one DCI is used for jointly scheduling at least two physical units in one set configured for the terminal;
determining, by the terminal, a quantity of HARQ-ACK bits corresponding to each of the at least one DCI; and
generating and sending, by the terminal, a HARQ-ACK codebook corresponding to the at least one DCI based on the quantity of HARQ-ACK bits corresponding to each of the at least one DCI.

According to a second aspect, a feedback information transmission method is provided, including:
sending, by a network-side device, configuration information, where the configuration information is used for indicating at least two sets configured for a terminal, and each set includes at least two physical units;
sending, by the network-side device, at least one DCI, where each of the at least one DCI is associated with one set configured for the terminal and is used for jointly scheduling at least two physical units in the associated set; and
receiving, by the network-side device, a HARQ-ACK codebook corresponding to the at least one DCI.

According to a third aspect, a feedback information transmission apparatus is provided, which is executed by a terminal, and the apparatus includes:
a first receiving module, configured to receive configuration information, where the configuration information is used for indicating that at least two sets are configured for the terminal and each set includes at least two physical units;
a second receiving module, configured to receive at least one downlink control information DCI, where each of the at least one DCI is used for jointly scheduling at least two physical units in one set configured for the terminal;
a first processing module, configured to determine a quantity of HARQ-ACK bits corresponding to each of the at least one DCI; and
a second processing module, configured to generate and send a HARQ-ACK codebook corresponding to the at least one DCI based on the quantity of HARQ-ACK bits corresponding to each of the at least one DCI.

According to a fourth aspect, a feedback information transmission apparatus is provided, which is executed by a network-side device, and the apparatus includes:
a first sending module, configured to send configuration information, where the configuration information is used for indicating at least two sets configured for a terminal, and each set includes at least two physical units;
a second sending module, configured to send at least one DCI, where each of the at least one DCI is associated with one set configured for the terminal and is used for jointly scheduling at least two physical units in the associated set; and
a data receiving module, configured to receive a HARQ-ACK codebook corresponding to the at least one DCI.

According to a fifth aspect, a terminal is provided, including a processor and a memory, where a program or instructions capable of running on the processor are stored in the memory. When the program or the instructions are executed by the processor, the steps of the feedback information transmission method according to the first aspect are implemented.

According to a sixth aspect, a network-side device is provided, including a processor and a memory, where a program or instructions capable of running on the processor are stored in the memory. When the program or the instructions are executed by the processor, the steps of the feedback information transmission method according to the second aspect are implemented.

According to a seventh aspect, a feedback information transmission system is provided, including a network-side device and a terminal, where the terminal is configured to perform the steps of the feedback information transmission method according to the first aspect, and the network-side device is configured to perform the steps of the feedback information transmission method according to the second aspect.

According to an eighth aspect, a readable storage medium is provided, where a program or instructions are stored in the readable storage medium, and when the program or the instructions are executed by a processor, the steps of the feedback information transmission method according to the first aspect are implemented, or the steps of the feedback information transmission method according to the second aspect are implemented.

According to a ninth aspect, a chip is provided, where the chip includes a processor and a communications interface, the communications interface is coupled to the processor, and the processor is configured to run a program or instructions to implement the feedback information transmission method according to the first aspect or the feedback information transmission method according to the second aspect.

According to a tenth aspect, a computer program/program product is provided, where the computer program/program product is stored in a storage medium, and the computer program/program product is executed by at least one processor to implement the steps of the feedback information transmission method according to the first aspect or the second aspect.

In the embodiments of this application, the terminal determines a corresponding quantity of HARQ-ACK bits for each received DCI, and determines a final to-be-fed-back HARQ-ACK codebook based on the quantities of HARQ-ACK bits, so that the terminal and the network-side device have a consistent understanding on feedback of the HARQ-ACK codebook, which helps the network-side device to correctly demodulate the HARQ-ACK codebook.

### BRIEF DESCRIPTION OF DRAWINGS

To describe the embodiments of this application more clearly, the following briefly describes the accompanying drawings required for describing the embodiments. Apparently, the accompanying drawings in the following description show merely some embodiments of this application, and a person of ordinary skill in the art may derive other drawings from these accompanying drawings without creative efforts.
FIG. 1 is a block diagram of a wireless communications system to which embodiments of this application are applicable;
FIG. 2 is a flowchart of a feedback information transmission method according to an embodiment of this application;
FIG. 3 is a flowchart of another feedback information transmission method according to an embodiment of this application;
FIG. 4 is a structural block diagram of a feedback information transmission apparatus according to an embodiment of this application;
FIG. 5 is a structural block diagram of another feedback information transmission apparatus according to an embodiment of this application;
FIG. 6 is a structural block diagram of a communication device according to an embodiment of this application;
FIG. 7 is a schematic diagram of a hardware structure of a terminal according to an embodiment of this application;
FIG. 8 is a structural block diagram of a terminal according to an embodiment of this application; and
FIG. 9 is a structural block diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. Based on the embodiments in this application, all other embodiments obtained by ordinary people in this field belong to the protection scope of this application.

The terms "first", "second", and the like in this application are used to distinguish between similar objects instead of describing a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or at least two first objects. In addition, "and/or" in this application means at least one of the connected objects, for example, "A or B" covers three schemes, namely, scheme 1: including A but not B; scheme 2: including B but not A; scheme 3: including both A and B. The character "/" generally represents an "or" relationship between the associated objects.

The term "indication" in this application may refer to either a direct indication (or an explicit indication) or an indirect indication (or an implicit indication). The direct indication can be understood as a sender explicitly informing, through the sent indication, a receiver of content such as specific information, actions to be performed, or a result of a request. The indirect indication can be understood as the receiver determining corresponding information based on an indication sent by the sender, or making a judgment and determining, based on a judgment result, a necessary action, a request result, and the like.

It should be noted that technologies described in the embodiments of this application are not limited to a long term evolution (Long Term Evolution, LTE) or LTE-Advanced (LTE-Advanced, LTE-A) system, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6th generation (6th Generation, 6G) communication system.

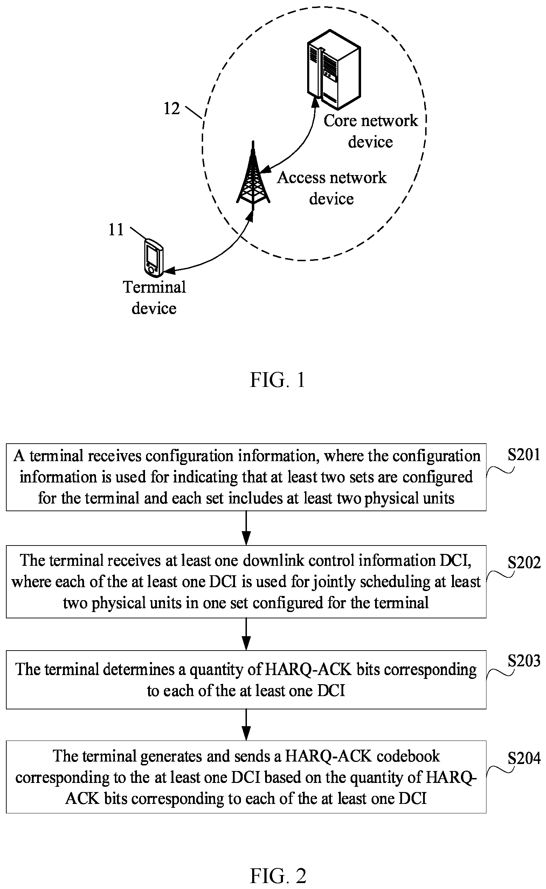

FIG. 1 illustrates a block diagram of a wireless communication system to which an embodiment of this application can be applied. The wireless communication system includes a terminal device 11 and a network-side device 12. The terminal device 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship user equipment, pedestrian user equipment (Pedestrian User Equipment, PUE), a smart home device (a home device with wireless communication function, such as a refrigerator, a television, a washing machine, or a furniture), a game console, a personal computer (personal computer, PC), a teller machine, a self-service machine, or the like. The wearable device includes: a smart watch, a smart wrist band, smart earphones, smart glasses, smart jewelry (smart bracelet, smart wristband, smart ring, smart necklace, smart anklet, smart ankle bracelet, or the like), smart wristband, smart clothing, and the like. The vehicle user equipment can alternatively be referred to as an in-vehicle terminal, an in-vehicle controller, an in-vehicle module, an in-vehicle component, an in-vehicle chip, an in-vehicle unit, or the like. It should be noted that a specific type of the terminal device 11 is not limited in the embodiments of this application. The network-side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN), a WLAN access point (Access Point, AS) or a wireless fidelity (Wireless Fidelity, Wi-Fi) node. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission and reception point (Transmission Reception Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, in the embodiments of this application, a core network device in an NR system is used as an example for description, and a specific type of the core network device is not limited.

To resolve the problem that there is no scheme to determine a final to-be-fed-back HARQ-ACK codebook in the related art in a case that cells jointly schedulable by one DCI are at least two sets, this application proposes a feedback information transmission method, in which the terminal determines a final to-be-fed-back HARQ-ACK codebook based on a quantity of HARQ-ACK bits corresponding to each DCI, so that the terminal and the network-side device have a consistent understanding on feedback of the HARQ-ACK codebook, which helps the network-side device to correctly demodulate the HARQ-ACK codebook. The following specifically describes the feedback information transmission method provided in the embodiments of this application through specific embodiments and application scenarios thereof with reference to the accompanying drawings.

In a first aspect, as shown in FIG. 2, FIG. 2 is a flowchart of a feedback information transmission method according to an embodiment of this application; and the method may include the following steps.

Step S201: A terminal receives configuration information, where the configuration information is used for indicating that at least two sets are configured for the terminal and each set includes at least two physical units.

In specific implementation, at least two sets are configured for the terminal, and one set contains all physical units jointly schedulable by DCI corresponding to the set. In a possible implementation, one physical unit can merely belong to one set. For example, DCI corresponding to a specific set contains DCI for jointly scheduling physical units 1 and 2 and DCI for jointly scheduling physical units 1 and 3. In this case, the physical units 1, 2, and 3 are all physical units jointly schedulable by the DCI corresponding to the set. It can be understood that DCI corresponding to a set is DCI that can jointly schedule at least two physical units in the set.

The physical unit is any one of the following: a cell; a bandwidth part BWP; a resource pool; and a physical downlink shared channel PDSCH. Each cell may have one PUSCH or PDSCH. Based on the BWP (BandWidth Part, bandwidth part), a spectrum of 5G can be divided into many small blocks in a specific period of time. Each BWP may use different parameter sets, as well as different bandwidths, subcarrier spacings, and other control parameters, which is equivalent to dividing the cell into several sub-cells with different configurations to adapt to different types of terminals and service types. The resource pool contains time-frequency resources used by the cell for transmission.

Step S202: The terminal receives at least one downlink control information DCI, where each of the at least one DCI is used for jointly scheduling at least two physical units in one set configured for the terminal.

In specific implementation, the terminal receives one or at least two DCIs, and the at least two DCIs can jointly schedule physical units in one set or can jointly schedule physical units in different sets separately.

Step S203: The terminal determines a quantity of HARQ-ACK bits corresponding to each of the at least one DCI.

In specific implementation, the terminal determines a corresponding quantity of HARQ-ACK bits for each received DCI. The quantity of HARQ-ACK bits determined for DCIs may be the same or different. However, the quantity of HARQ-ACK bits determined for each DCI should not be less than an actual quantity of HARQ-ACK bits corresponding to the DCI. For example, one DCI has jointly scheduled three physical units (such as cells with single codeword) in a specific set. In this case, the terminal actually needs to feed back 3 bits of HARQ-ACK information for the DCI, and then a quantity of HARQ-ACK bits determined by the terminal for the DCI should not be less than 3. A specific manner for determining a quantity of HARQ-ACK bits corresponding to DCI received by the terminal will be described in detail in the following implementation 1.

Step S204: The terminal generates and sends a HARQ-ACK codebook corresponding to the at least one DCI based on the quantity of HARQ-ACK bits corresponding to each of the at least one DCI.

In specific implementation, the terminal can determine HARQ-ACK bits for each DCI based on the quantity of HARQ-ACK bits corresponding to the DCI. Based on a feedback resource indicated by each DCI, HARQ-ACK bits for all or part of DCIs corresponding to a same feedback resource are determined as a HARQ-ACK codebook corresponding to the feedback resource, and the corresponding HARQ-ACK codebook is sent by using the feedback resource.

It can be understood that in a case of receiving one DCI, the terminal determines HARQ-ACK bits for the DCI based on a quantity of HARQ-ACK bits corresponding to the DCI, and directly determines the HARQ-ACK bits for the DCI as a final to-be-fed-back HARQ-ACK codebook. The generation manner and sending manner of the HARQ-ACK codebook will be described in detail in the following implementations 2 and 3.

According to the above steps, the terminal determines the corresponding quantity of HARQ-ACK bits for each received DCI, and determines the final to-be-fed-back HARQ-ACK codebook based on the quantity of HARQ-ACK bits, so that the terminal and the network-side device have a consistent understanding on the HARQ-ACK codebook, which helps the network-side device to correctly demodulate the HARQ-ACK codebook.

### Implementation 1

This implementation describes how the terminal determines a quantity of HARQ-ACK bits corresponding to DCI. Based on whether a same quantity of HARQ-ACK bits is determined for DCIs scheduling different sets, determining the quantity of HARQ-ACK bits corresponding to each DCI may specifically involve the following two cases.

Case 1: The terminal determines a same quantity of HARQ-ACK bits for DCI corresponding to any one set configured for the terminal. In case 1, the terminal can determine the same quantity of HARQ-ACK bits in the following two manners.

Manner 1: For all combinations of jointly schedulable physical units in at least two sets configured for the terminal, the terminal determines that quantities of HARQ-ACK bits for all the combinations of jointly schedulable physical units are the same quantity of HARQ-ACK bits.

It should be noted that quantities of HARQ-ACK bits for DCIs corresponding to the combinations of all jointly schedulable physical units (hereinafter referred to as "the combinations of all jointly schedulable physical units") in the at least two sets configured for the terminal can be determined according to the following steps:
in a case that all the combinations of jointly schedulable physical units include a target physical unit, the terminal determines a maximum quantity of transport blocks TBs that can be carried by physical units jointly schedulable by the DCIs corresponding to all the combinations of jointly schedulable physical units to be the quantity of HARQ-ACK bits for the DCIs corresponding to all the combinations of jointly schedulable physical units, where the target physical unit is a physical unit configured with two codewords and not configured with spatial division multiplexing; and
in a case that all the combinations of jointly schedulable physical units do not include the target physical unit, the terminal determines a maximum quantity of physical units jointly schedulable by DCIs corresponding to all the combinations of jointly schedulable physical units to be the quantity of HARQ-ACK bits for the DCIs corresponding to all the combinations of jointly schedulable physical units.

In manner 1, the terminal can determine all combinations of jointly schedulable physical units based on the configured at least two sets. In a case that all the combinations of jointly schedulable physical units include a target physical unit (which is a physical unit configured with two codewords and not configured with spatial division multiplexing), the terminal determines that a maximum quantity of transport blocks jointly schedulable by target DCIs corresponding to all the combinations of jointly schedulable physical units is a quantity of HARQ-ACK bits for target DCIs corresponding to a target set. In a case that all the combinations of jointly schedulable physical units do not include the target physical unit, the terminal determines that a maximum quantity of physical units jointly schedulable by the target DCIs corresponding to all the combinations of jointly schedulable physical units is the quantity of HARQ-ACK bits for the target DCIs corresponding to all the combinations of jointly schedulable physical units. It can be understood that the combinations of all jointly schedulable physical units can be formed by all the physical units (such as cells or BWPs) contained in the at least two sets configured for the terminal.

For example, sets 1 and 2 are configured for the terminal, and both sets 1 and 2 are configured with spatial division multiplexing or both sets 1 and 2 are not configured with two codewords (that is, a target set does not include the target physical unit). Physical units contained in set 1 are: cells 1, 2, and 3, and combinations of jointly schedulable physical units are: cells 1 and 2; and cells 1, 2, and 3. The physical units contained in set 2 are: cells A, B, and C, and the combinations of jointly schedulable physical units are: cells A and C; and cells A, B, and C. In this case, the combinations of all jointly schedulable physical units are: cells 1 and 2; cells 1, 2, and 3; cells A and C; and cells A, B, and C. Then, the maximum quantity of jointly schedulable physical units in the combinations of all jointly schedulable physical units is 6; and the terminal determines that the quantity of HARQ-ACK bits for the DCI scheduling any one of sets 1 and 2 is 6. If the terminal receives one DCI (jointly scheduling cells 1 and 2), or two DCIs respectively corresponding to two sets (such as one DCI jointly scheduling cells 1, 2, and 3 and the other DCI jointly scheduling cells A and C) or two DCIs corresponding to a same set (such as one DCI jointly scheduling cells 1 and 2 and the other DCI jointly scheduling cells 1, 2, and 3), the terminal determines that the quantity of HARQ-ACK bits for the one or two DCIs received is 6. It can be understood that, based on the foregoing sets 1 and 2, if cell 1 is configured with two codewords and not configured with spatial division multiplexing (that is, all combinations of jointly schedulable physical units include target physical units), the terminal determines the quantity of HARQ-ACK bits corresponding to each received DCI to be 7 based on the maximum quantity of transport blocks that can be carried by the jointly schedulable physical units in all the combinations of jointly schedulable physical units.

Manner 2: The terminal determines that a maximum quantity of HARQ-ACK bits for DCIs corresponding to the configured at least two sets is the same quantity of HARQ-ACK bits.

It should be noted that a quantity of HARQ-ACK bits for DCI corresponding to a single set (such as any one set configured for the terminal) can be determined according to the following steps:
in a case that the set includes a target physical unit, the terminal determines that a maximum quantity of transport blocks TBs that can be carried by physical units jointly schedulable by DCI corresponding to the set is the quantity of HARQ-ACK bits for the DCI corresponding to the set, where the target physical unit is a physical unit configured with two codewords and not configured with spatial division multiplexing; and
in a case that the set does not include a target physical unit, the terminal determines that a maximum quantity of physical units jointly schedulable by the DCI corresponding to the set is the quantity of HARQ-ACK bits for the DCI corresponding to the set.

Using sets 1 and 2 in manner 1 as examples, if cell 1 is configured with two codewords and not configured with spatial division multiplexing, a quantity of HARQ-ACK bits for DCI corresponding to set 1 is a maximum quantity (that is, 4) of transport blocks that can be carried by physical units jointly schedulable by the DCI; and a quantity of HARQ-ACK bits for set 2 is a maximum quantity (that is, 3) of physical units jointly schedulable by the DCI. In this case, the same quantity of HARQ-ACK bits is thus determined to be 4 based on a maximum value of quantities of HARQ-ACK bits for the DCIs corresponding to sets 1 and 2.

Case 2: The terminal determines a respective quantity of HARQ-ACK bits for different DCIs that are corresponding to different sets configured for the terminal.

In specific implementation, for different DCIs that are corresponding to different sets configured for the terminal, the terminal determines indexes of sets corresponding to different DCIs; and the terminal can determine, based on the indexes of the sets corresponding to different DCIs, the quantity of HARQ-ACK bits for different DCIs corresponding to different sets configured for the terminal.

For example, in a case that the terminal receives two DCIs, one DCI jointly schedules the physical units in set 1 and an index of the set corresponding to the DCI is 1; and the other DCI jointly schedules the physical units in set 2 and an index of the set corresponding to the DCI is 2. In this case, the terminal can determine the respective quantity of HARQ-ACK bits for the two DCIs based on a mapping relationship between a preset set index and a quantity of HARQ-ACK bits.

In a possible implementation, in a case of receiving one DCI, the terminal determines the same quantity of HARQ-ACK bits to be a quantity of HARQ-ACK bits for the received one DCI, or the terminal determines the quantity of HARQ-ACK bits for the received one DCI based on a set corresponding to the received one DCI.

The terminal generates a HARQ-ACK codebook corresponding to the received one DCI based on the quantity of HARQ-ACK bits for the received one DCI, and sends the corresponding HARQ-ACK codebook for the DCI on a feedback resource indicated by the quantity of HARQ-ACK bits for the received one DCI.

For example, the terminal receives one DCI, and the DCI jointly schedules the physical units in set 1. The terminal can determine, according to a protocol prescription or configuration information of the network-side device by using the foregoing case 1, that the same quantity of HARQ-ACK bits is 4. In this case, the quantity of HARQ-ACK bits corresponding to the DCI is 4, so that the terminal generates the HARQ-ACK bits corresponding to the DCI based on the quantity of HARQ-ACK bits being 4, uses them as a HARQ-ACK codebook corresponding to the DCI, and sends the HARQ-ACK codebook corresponding to the DCI on a feedback resource indicated by the DCI. Alternatively, according to a protocol prescription or configuration information of the network-side device by using the foregoing case 2, the terminal can determine that the quantity of HARQ-ACK bits for the DCI corresponding to set 1 is 2. In this case, the quantity of HARQ-ACK bits corresponding to the DCI is 2, so that the terminal generates HARQ-ACK bits corresponding to the DCI based on the quantity of HARQ-ACK bits being 2, uses them as a HARQ-ACK codebook corresponding to the DCI, and sends the HARQ-ACK codebook corresponding to the DCI on a feedback resource indicated by the DCI.

It can be understood that according to the protocol prescription or configuration information of the network-side device, the terminal can apply either of the foregoing case 1 and case 2 to determine the quantity of HARQ-ACK bits corresponding to at least one DCI received by the terminal, or can apply the foregoing case 1 and case 2 together to determine the quantity of HARQ-ACK bits corresponding to the at least two DCIs received by the terminal.

In a case that case 1 and case 2 are applied together, it is necessary to use a feedback resource to limit the quantity of HARQ-ACK bits corresponding to the DCI, so as to ensure that the terminal and the network-side device have a consistent understanding on the HARQ-ACK codebook. For example, in a case that the received at least two DCIs indicate a same feedback resource (that is, applying the case 1), the terminal determines the same quantity of HARQ-ACK bits for the received at least two DCIs. In a case that the received at least two DCIs indicate different feedback resources (that is, applying the case 2), the terminal determines the respective quantity of HARQ-ACK bits for different DCIs that are corresponding to different sets configured for the terminal. This ensures that the quantity of HARQ-ACK bits for all DCIs associated with the same feedback resource is the same, avoiding a case that the terminal and the network-side device have inconsistent understanding on codebook feedback.

It can be understood that in the process of determining the quantity of HARQ-ACK bits for the received DCI by the terminal by using case 1 and/or case 2, the network-side device may further limit scheduling of a feedback resource (such as PUCCH (Physical Uplink Control Channel, physical uplink control channel) or PUSCH (Physical Uplink Shared Channel, physical uplink shared channel)) for the DCI. For example, the network-side device may not schedule a same feedback resource for at least two DCIs for which HARQ-ACK codebooks have different bit quantities and whose jointly schedulable physical units are contained in at least two sets; or the network-side device may not schedule a same feedback resource for at least two DCIs whose corresponding sets are different and whose jointly schedulable physical units are contained in at least two sets, so as to further ensure that the terminal and the network-side device have a same understanding on codebook feedback. For example, the terminal does not expect to receive or be scheduled a same feedback resource for at least two DCIs for which HARQ-ACK codebooks have different bit quantities and whose jointly schedulable physical units are contained in at least two sets; or the terminal does not expect to receive or be scheduled a same feedback resource for at least two DCIs whose corresponding sets are different and whose jointly schedulable physical units are contained in at least two sets, so as to further ensure that the terminal and the network-side device have a same understanding on codebook feedback.

### Implementation 2

This implementation describes how the terminal generates and sends cascaded HARQ-ACK bits. Based on different manners of cascading HARQ-ACK bits, it can be specifically divided into the following three cases.

Case 1: In a case that at least two DCIs received by the terminal indicate a same feedback resource, and the terminal determines a same quantity of HARQ-ACK bits for DCI corresponding to any one configured set, the network-side device uniformly counts each DCI for which the same feedback resource is indicated, and generates a first count to be carried by each DCI, which helps the terminal to determine, based on the first count, whether any DCI is missed. The terminal sequentially cascades, based on a value of the first count carried by each DCI in the at least two DCIs indicating the same feedback resource, respective HARQ-ACK bits for the at least two DCIs for which the same feedback resource is indicated, generates one HARQ-ACK codebook for the received at least two DCIs, and sends the HARQ-ACK codebook for the at least two DCIs on the same feedback resource.

It can be understood that if the terminal receives DCIs with the first counts being 1 and 3, it can be determined that DCI with a first count of 2 is missed, and in this case, the terminal can determine NACK (Negative Acknowledgement, negative acknowledgement) as actual HARQ-ACK bits for the DCI with the first count of 2. Because the quantity of HARQ-ACK bits for each DCI is the same, the terminal can cascade the HARQ-ACK bits for the DCIs with the first counts of 1, 2, and 3 respectively (the sets corresponding to the three DCIs may be the same or different, and the same feedback resource needs to be indicated) based on the same quantity (for example, 3) of HARQ-ACK bits, then the quantity of HARQ-ACK bits in the final to-be-fed-back HARQ-ACK codebook is 9, with the first 3 bits corresponding to the DCI with the first count of 1, the middle 3 bits corresponding to the DCI with the first count of 2, and the last 3 bits corresponding to the DCI with the first count of 3. Finally, the terminal uses the one feedback resource indicated by the DCI to send the HARQ-ACK codebook.

Case 2: In a case that at least two DCIs corresponding to different sets and received by the terminal indicate a same feedback resource, HARQ-ACK bits for different sets are cascaded and sent based on target information of different sets corresponding to the at least two DCIs indicating the same feedback resource.

In specific implementation, based on respective quantities of HARQ-ACK bits for the at least two DCIs corresponding to different sets and indicating the same feedback resource, the terminal generates HARQ-ACK bits for the sets respectively corresponding to the at least two DCIs indicating the same feedback resource, where HARQ-ACK bits for one set are obtained by cascading respective HARQ-ACK bits for the at least two DCIs corresponding to the set; and
based on target information of different sets corresponding to at least two DCIs indicating the same feedback resource, the terminal cascades HARQ-ACK bits for the sets respectively corresponding to the at least two DCIs indicating the same feedback resource, generates one HARQ-ACK codebook corresponding to the at least two DCIs that correspond to different sets and indicate the same feedback resource, and sends the one HARQ-ACK codebook on the same feedback resource.

For example, the terminal receives DCI1 and DCI2 corresponding to set 1 and DCI3 and DCI4 corresponding to set 2, and DCI1, DCI2, DCI3, and DCI4 indicate a same feedback resource. The terminal cascades HARQ-ACK bits for DCI1 and DCI2 (a cascading order of HARQ-ACK bits for one set is determined based on second counts carried by the DCIs; for description of the second count, see below) to generate the HARQ-ACK bits for set 1 corresponding to DCI1 and DCI2. The terminal cascades HARQ-ACK bits for DCI3 and DCI4 to generate the HARQ-ACK bits for set 2 corresponding to DCI3 and DCI4. The terminal cascades the generated HARQ-ACK bits for set 1 and generated HARQ-ACK bits for set 2 (the concatenation order of HARQ-ACK bits between different sets is determined according to the target information of different sets), and generate and send one HARQ-ACK codebook corresponding to DCI1, DCI2, DCI3, and DCI4.

The target information includes any one of the following:
indexes of sets respectively corresponding to the at least two DCIs that correspond to different sets and indicate the same feedback resource;
an actual quantity of HARQ-ACK bits for the sets respectively corresponding to the at least two DCIs that correspond to different sets and indicate the same feedback resource, where an actual quantity of HARQ-ACK bits for one set is determined based on a quantity of physical units jointly schedulable by DCI corresponding to the set; and
reference cell index information of sets respectively corresponding to the at least two DCIs that correspond to different sets and indicate the same feedback resource; for example, the terminal receives DCI1 and DCI2 corresponding to set 1 and DCI3 and DCI4 corresponding to set 2. DCI1, DCI2, DCI3, and DCI4 indicate a same feedback resource, and an actual quantity of HARQ-ACK bits for set 1 corresponding to DCI1 and DCI2 is 3, and an actual quantity of HARQ-ACK bits for set 2 corresponding to DCI3 and DCI4 is 4. Then after the terminal sequentially cascades the generated HARQ-ACK bits for sets 1 and 2, the first N1 bits in the generated HARQ-ACK codebook (with M bits in total, M=N1+N2) correspond to the HARQ-ACK bits for set 1, and the last N2 bits correspond to the HARQ-ACK bits for set 2, where N1 and N2 are the quantity of HARQ-ACK bits for sets 1 and 2 generated by the terminal respectively.

In a possible implementation, cascading HARQ-ACK bits for a set can be implemented by performing the following step.

In a case that any one of the at least two DCIs corresponding to different sets and received by the terminal is first DCI, the first DCI is at least one DCI corresponding to a first set, and HARQ ACK bits for the first set corresponding to the first DCI are generated by performing the following step:
the terminal sequentially cascades HARQ-ACK bits for each DCI in the first DCI based on a value of a second count carried by the first DCI to obtain HARQ-ACK bits for the first set corresponding to the first DCI. It should be noted that when the terminal receives only one DCI corresponding to a specific set, HARQ ACK bits for the DCI are used as the HARQ ACK bits for the set.

In specific implementation, the network-side device can count DCIs corresponding to different sets respectively, and generate a second count to be carried by each DCI, which helps the terminal to determine, based on the second count, whether DCI of a specific set is missed. The terminal sequentially cascades respective HARQ-ACK bits for at least two first DCIs corresponding to a same set (such as the first set) based on a second count carried by each of the received at least two DCIs to obtain HARQ-ACK bits for the first set corresponding to the first DCI.

For example, if the terminal receives two DCIs with the second counts of 1 and 2 for set 1 and two DCIs with the second counts of 1 and 3 for set 2, the terminal can determine that one DCI for set 2 is missed. Then the terminal can sequentially cascade, based on the second counts and based on the quantity of HARQ-ACK bits for set 1, HARQ-ACK bits for the received two DCIs of set 1; sequentially cascade, based on the second counts and based on the quantity of HARQ-ACK bits for set 2, HARQ-ACK bits for the received two DCIs of set 2 and HARQ-ACK bits (which are set to be NACK) for the one DCI not received; and then generate one HARQ-ACK codebook based on the two cascaded HARQ-ACK bits for the two sets and send the one HARQ-ACK codebook using a same feedback resource indicated for the two sets.

Case 3: In a case that at least two DCIs corresponding to different sets and received by the terminal indicate different feedback resources, the terminal sends HARQ-ACK bits for different sets using different feedback resources.

In specific implementation, based on respective quantities of HARQ-ACK bits for the at least two DCIs corresponding to different sets and indicating different feedback resources, the terminal generates HARQ-ACK bits for the sets respectively corresponding to the DCIs indicating different feedback resources, where HARQ-ACK bits for one set are obtained by cascading respective HARQ-ACK bits for at least two DCIs corresponding to the set. The HARQ-ACK bits for the one set can be generated by performing the step of cascading the HARQ-ACK bits in the set in the foregoing case 2.

The terminal uses the HARQ-ACK bits for the sets respectively corresponding to the at least two DCIs indicating different feedback resources and corresponding to different sets as their respective corresponding HARQ-ACK codebooks, and sends their respective corresponding HARQ-ACK codebooks on respective indicated feedback resources.

It can be understood that any one of the foregoing HARQ-ACK codebooks sent on the feedback resources indicated by the DCIs respectively may be HARQ-ACK bits of one DCI (that is, in a case that no other DCI corresponds to a same set as the DCI, it is unnecessary to perform the step of cascading HARQ-ACK bits for the set, and the HARQ-ACK bits for the DCI are HARQ-ACK bits for the set corresponding to the DCI, that is, one HARQ-ACK codebook needs to be sent on the feedback resource indicated by the DCI); or may be HARQ-ACK bits for one set corresponding to at least two DCIs (that is, cascaded HARQ-ACK bits for at least two DCIs of the set).

### Implementation 3

This implementation describes how the terminal selects HARQ-ACK bits for DCI used for generating the HARQ-ACK codebook. There may be specifically the following two manners.

Manner 1: In a case that sets corresponding to at least two DCIs are different sets, or in a case that the sets corresponding to the at least two DCIs include a set with different quantities of HARQ-ACK bits for corresponding DCIs, the terminal determines, from the at least two DCIs according to a predefined rule, at least one DCI for which a HARQ-ACK is preferentially fed back and determines HARQ-ACK bits for the at least one DCI for which the HARQ-ACK is preferentially fed back, generates one HARQ-ACK codebook for the at least one DCI for which the HARQ-ACK is preferentially fed back, and sends the HARQ-ACK codebook for the at least one DCI for which the HARQ-ACK is preferentially fed back.

The predefined rule includes at least one of the following:
The DCI for which the HARQ-ACK is preferentially fed back is DCI corresponding to a set with a largest quantity of HARQ-ACK bits. For example, if the quantity of HARQ-ACK bits for set 1 is 3 and the quantity of HARQ-ACK bits for set 2 is 4, the terminal preferentially feeds back HARQ-ACK bits for all DCIs corresponding to set 2.

The DCI for which the HARQ-ACK is preferentially fed back is DCI corresponding to a set that includes a largest quantity of jointly schedulable physical units. For example, if set 1 contains 3 cells and set 2 contains 4 cells, the terminal preferentially feeds back HARQ-ACK bits for all DCIs corresponding to set 2.

The DCI for which the HARQ-ACK is preferentially fed back is DCI corresponding to a set with a largest actual quantity of HARQ-ACK bits, where an actual quantity of HARQ-ACK bits for one set is determined based on a quantity of physical units jointly schedulable by DCI corresponding to the set. For example, when the terminal receives two DCIs, DCI1 jointly scheduling two cells in one set and DCI2 jointly scheduling three cells in another set, the terminal preferentially feeds back HARQ-ACK bits for DCI2.

In this embodiment, the terminal chooses to preferentially feed back HARQ-ACK bits for DCI with a larger quantity of HARQ-ACK bits, which can reduce codebook analysis errors caused by sending too many HARQ-ACK bits. In addition, the terminal can directly discard DCI with fewer HARQ-ACK bits and feed back only HARQ-ACK bits for DCI with more HARQ-ACK bits, thus reducing overheads of feedback information transmission.

In a possible implementation, the terminal sends remaining HARQ-ACK bits for the DCI after a predefined time elapses after sending of the HARQ-ACK codebook corresponding to the at least one DCI for which the HARQ-ACK is preferentially fed back; or, the terminal sends remaining HARQ-ACK bits for the DCI based on DCI that is received after sending of the HARQ-ACK codebook corresponding to the at least one determined DCI for which the HARQ-ACK is preferentially fed back.

In this embodiment, the terminal can feed back of the remaining HARQ-ACK bits for the DCI after a predefined time, or suspend the feedback until triggering of feedback for the next DCI. For example, the terminal suspends the HARQ-ACK bits for DCI2, and after preferentially feeding back HARQ-ACK bits for DCI1, receives DCI3, and feedback resources for DCI3 and DCI2 are the same and/or sets corresponding to DCI3 and DCI2 are the same and/or priorities corresponding to DCI3 and DCI2 are the same; in this case, the terminal can cascade and send the HARQ-ACK bits for DCI3 and DCI2.

Manner 2: In a case that the received at least two DCIs correspond to different sets and the at least two DCIs indicate a same feedback resource, the terminal determines respective priorities of the at least two DCIs and sends the HARQ-ACK codebook corresponding to DCI with a higher priority.

In a possible implementation, the terminal discards the remaining HARQ-ACK bits for the DCI.

In a possible implementation, the determining, by the terminal, respective priorities of the at least two DCIs based on at least one of the following includes:
an actual quantity of HARQ-ACK bits for sets respectively corresponding to the at least two DCIs, where an actual quantity of HARQ-ACK bits for one set is determined based on a quantity of physical units jointly schedulable by the DCI corresponding to the set;
priorities respectively configured for the at least two DCIs;
data transmission priorities respectively indicated by the at least two DCIs; and
respective SCSs (subcarrier spacing, subcarrier spacing) of the at least two DCIs.

In this embodiment, the network-side device can set the priorities of the sets configured for the terminal, so that the terminal can determine, based on the priorities of the sets, the priorities configured for the DCIs. After receiving the at least two DCIs, the terminal evaluates reporting overheads and urgency of feedback information for each DCI based on an actual quantity of HARQ-ACK bits that needs to be fed back for the DCI, a priority of the DCI, a priority of data transmitted by DCI, and an SCS of DCI, so as to properly determine the quantities of HARQ-ACK bits for DCIs that need to be transmitted and discarded.

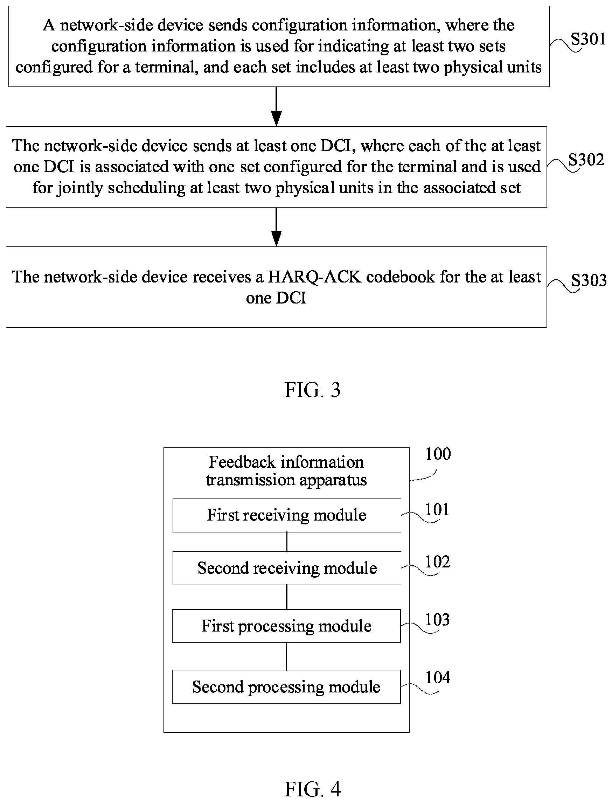

In a second aspect, as shown in FIG. 3, an embodiment of this application provides another feedback information transmission method, and the method at least includes the following steps.

Step S301: A network-side device sends configuration information, where the configuration information is used for indicating at least two sets configured for a terminal, and each set includes at least two physical units.

Step S302: The network-side device sends at least one DCI, where each of the at least one DCI is associated with one set configured for the terminal and is used for jointly scheduling at least two physical units in the associated set.

Step S303: The network-side device receives a HARQ-ACK codebook for the at least one DCI.

In this embodiment of this application, the network-side device may be an access network device in FIG. 1, such as a base station or an artificial intelligence processing node newly defined by the access network side, or a core network device in FIG. 1, such as a network data analytics function (Network Data Analytics Function, NWDAF), a location management function (Location Management Function, LMF), a processing node newly defined by the core network side, or a combination of at least two of the above nodes.

In the feedback information transmission method provided in this embodiment of this application, the executing subject may be a feedback information transmission apparatus. The feedback information transmission apparatus provided in this embodiment of this application is described by an example in which the feedback information transmission apparatus performs the feedback information transmission method.

In a third aspect, an embodiment of this application provides a feedback information transmission apparatus, which is executed by a terminal. As shown in FIG. 4, the feedback information transmission apparatus 100 includes:
a first receiving module 101, configured to receive configuration information, where the configuration information is used for indicating that at least two sets are configured for the terminal and each set includes at least two physical units;
a second receiving module 102, configured to receive at least one downlink control information DCI, where each of the at least one DCI is used for jointly scheduling at least two physical units in one set configured for the terminal;
a first processing module 103, configured to determine a quantity of HARQ-ACK bits corresponding to each of the at least one DCI; and
a second processing module 104, configured to generate and send a HARQ-ACK codebook corresponding to the at least one DCI based on the quantity of HARQ-ACK bits corresponding to each of the at least one DCI.

Optionally, the first processing module 103 includes:
a first processing sub-module, configured to determine the same quantity of HARQ-ACK bits for DCIs corresponding to any one set configured for the terminal; or determine a respective quantity of HARQ-ACK bits for different DCIs that are corresponding to different sets configured for the terminal.

Optionally, in a case that at least two DCIs are received, the first processing sub-module includes:
a second processing sub-module, configured to determine a same quantity of HARQ-ACK bits for the received at least two DCIs in a case that the received at least two DCIs indicate a same feedback resource.

In a case that at least two DCIs are received, the first processing sub-module includes:
a third processing sub-module, configured to: in a case that the received at least two DCIs indicate different feedback resources, determine a respective quantity of HARQ-ACK bits for different DCIs for which different feedback resources are indicated and that are corresponding to different sets configured for the terminal.

Optionally, the first processing sub-module includes:
a fourth processing sub-module, configured to determine all combinations of jointly schedulable physical units in the configured at least two sets; and
a fifth processing sub-module, configured to determine that quantities of HARQ-ACK bits for all the combinations of jointly schedulable physical units are the same quantity of HARQ-ACK bits.

Optionally, the fifth processing sub-module includes:
a sixth processing sub-module, configured to: in a case that all the combinations of jointly schedulable physical units include a target physical unit, determine a maximum quantity of transport blocks TBs that are able to be carried by jointly schedulable physical units in all the combinations of jointly schedulable physical units to be the quantity of HARQ-ACK bits for all the combinations of jointly schedulable physical units, where the target physical unit is a physical unit configured with two codewords and not configured with spatial division multiplexing; and
a seventh processing sub-module, configured to: in a case that all the combinations of jointly schedulable physical units do not include the target physical unit, determine a maximum quantity of jointly schedulable physical units in all the combinations of jointly schedulable physical units to be the quantity of HARQ-ACK bits for all the combinations of jointly schedulable physical units.

Optionally, the first processing sub-module includes:
an eighth processing sub-module, configured to determine a quantity of HARQ-ACK bits for DCIs respectively corresponding to the configured at least two sets; and
a ninth processing sub-module, configured to determine a maximum value of at least two determined quantities of HARQ-ACK bits as the same quantity of HARQ-ACK bits.

Optionally, the first processing sub-module includes:
a tenth processing sub-module, configured to: for different DCIs that are corresponding to different sets configured for the terminal, determine indexes of sets corresponding to different DCIs; and
an eleventh processing sub-module, configured to: based on the indexes of the sets corresponding to different DCIs, determine the quantity of HARQ-ACK bits for different DCIs corresponding to different sets configured for the terminal.

Optionally, in a case that at least two DCIs received indicate a same feedback resource and that the same quantity of HARQ-ACK bits is determined for the DCIs corresponding to any one set configured, the second processing module 104 includes:
a twelfth processing sub-module, configured to sequentially cascade, based on a value of a first count carried by each DCI in the at least two DCIs indicating the same feedback resource, respective HARQ-ACK bits of the at least two DCIs indicating the same feedback resource, generate one HARQ-ACK codebook corresponding to the received at least two DCIs, and send, on the same feedback resource, the one HARQ-ACK codebook corresponding to the at least two DCIs.

Optionally, in a case that at least two received DCIs corresponding to different sets indicate a same feedback resource, the second processing module 104 includes:
a thirteenth processing sub-module, configured to: based on respective quantities of HARQ-ACK bits for the at least two DCIs corresponding to different sets and indicating the same feedback resource, generate HARQ-ACK bits for the sets respectively corresponding to the at least two DCIs indicating the same feedback resource, where HARQ-ACK bits for one set are obtained by cascading respective HARQ-ACK bits for at least two DCIs corresponding to the set; and
a fourteenth processing sub-module, configured to: based on target information of different sets corresponding to at least two DCIs indicating the same feedback resource, cascade HARQ-ACK bits for the sets respectively corresponding to the at least two DCIs indicating the same feedback resource, generate one HARQ-ACK codebook corresponding to the at least two DCIs that correspond to different sets and indicate the same feedback resource, and send, on the same feedback resource, the one HARQ-ACK codebook corresponding to the at least two DCIs that correspond to different sets and indicate the same feedback resource; where
the target information includes any one of the following:
   indexes of sets respectively corresponding to the at least two DCIs that correspond to different sets and indicate the same feedback resource;
   an actual quantity of HARQ-ACK bits for the sets respectively corresponding to the at least two DCIs that correspond to different sets and indicate the same feedback resource, where an actual quantity of HARQ-ACK bits for one set is determined based on a quantity of physical units jointly schedulable by DCI corresponding to the set; and
   reference cell index information of sets respectively corresponding to the at least two DCIs that correspond to different sets and indicate the same feedback resource.

Optionally, in a case that at least two received DCIs corresponding to different sets indicate different feedback resources, the second processing module 104 includes:
a fifteenth processing sub-module, configured to: based on respective quantities of HARQ-ACK bits for the at least two DCIs corresponding to different sets and indicating different feedback resources, generate HARQ-ACK bits for the sets respectively corresponding to the DCIs indicating different feedback resources, where HARQ-ACK bits for one set are obtained by cascading respective HARQ-ACK bits for at least two DCIs corresponding to the set; and
a sixteenth processing sub-module, configured to use the HARQ-ACK bits for the sets respectively corresponding to the at least two DCIs indicating different feedback resources and corresponding to different sets as their respective corresponding HARQ-ACK codebooks, and send their respective corresponding HARQ-ACK codebooks on respective indicated feedback resources.

Optionally, in a case that any one of the received at least two DCIs corresponding to different sets is first DCI, the first DCI is at least one DCI corresponding to a first set, and the apparatus further includes:
a generating module, configured to sequentially cascade HARQ-ACK bits for each DCI in the first DCI based on a value of a second count carried by the first DCI to obtain HARQ-ACK bits for the first set corresponding to the first DCI.

Optionally, in a case that at least two DCIs are received, the second processing module 104 includes:
a seventeenth processing sub-module, configured to: in a case that sets corresponding to the at least two DCIs are different sets, or in a case that the sets corresponding to the at least two DCIs include a set with different quantities of HARQ-ACK bits for corresponding DCIs, determine, for the terminal from the at least two DCIs according to a predefined rule, at least one DCI for which a HARQ-ACK is preferentially fed back;
an eighteenth processing sub-module, configured to determine HARQ-ACK bits for the at least one DCI for which the HARQ-ACK is preferentially fed back, and generate one HARQ-ACK codebook corresponding to the at least one DCI for which the HARQ-ACK is preferentially fed back; and
a nineteenth processing sub-module, configured to send the HARQ-ACK codebook corresponding to the at least one DCI for which the HARQ-ACK is preferentially fed back.

Optionally, the apparatus further includes:
a third processing module, configured to: send remaining HARQ-ACK bits for the DCI after a predefined time elapses after the terminal sends the HARQ-ACK codebook corresponding to the at least one DCI for which the HARQ-ACK is preferentially fed back; or send remaining HARQ-ACK bits for the DCI based on DCI that is received after sending of the HARQ-ACK codebook corresponding to the at least one DCI for which the HARQ-ACK is preferentially fed back.

Optionally, the predefined rule includes at least one of the following:
the DCI for which the HARQ-ACK is preferentially fed back is DCI corresponding to a set with a largest quantity of HARQ-ACK bits;
the DCI for which the HARQ-ACK is preferentially fed back is DCI corresponding to a set that includes a largest quantity of jointly schedulable physical units; and
the DCI for which the HARQ-ACK is preferentially fed back is DCI corresponding to a set with a largest actual quantity of HARQ-ACK bits, where an actual quantity of HARQ-ACK bits for one set is determined based on a quantity of physical units jointly schedulable by DCI corresponding to the set.

Optionally, in a case that at least two DCIs are received, the second processing module 104 includes:
a twentieth processing sub-module, configured to determine respective priorities of the at least two DCIs in a case that the at least two DCIs correspond to different sets and the at least two DCIs indicate a same feedback resource; and
a twenty-first processing sub-module, configured to send a HARQ-ACK codebook corresponding to DCI with a higher priority.

Optionally, the twentieth processing sub-module includes:
a priority processing module, configured to determine respective priorities of the at least two DCIs based on at least one of the following, including:
an actual quantity of HARQ-ACK bits respectively corresponding to the at least two DCIs, where an actual quantity of HARQ-ACK bits for one DCI is determined based on a quantity of physical units jointly schedulable by the DCI;
priorities respectively configured for the at least two DCIs;
data transmission priorities respectively indicated by the at least two DCIs; and
respective SCSs for the at least two DCIs.

Optionally, in a case that one DCI is received, the second processing module 104 includes:
a twenty-second processing sub-module, configured to determine the same quantity of HARQ-ACK bits as a quantity of HARQ-ACK bits for the received one DCI, or determine a quantity of HARQ-ACK bits for the received one DCI based on a set corresponding to the received one DCI; and
a twenty-third processing sub-module, configured to generate a HARQ-ACK codebook corresponding to the DCI based on the quantity of HARQ-ACK bits, and send the HARQ-ACK codebook corresponding to the DCI on a feedback resource indicated by the DCI.

Optionally, the physical unit is any one of the following:
a cell;
a bandwidth part BWP;
a resource pool; and
a physical downlink shared channel PDSCH.

The feedback information transmission apparatus provided in this embodiment of this application can implement the processes implemented in the embodiments of the feedback information transmission method according to the first aspect, with the same technical effects achieved. To avoid repetition, details are not described herein again.

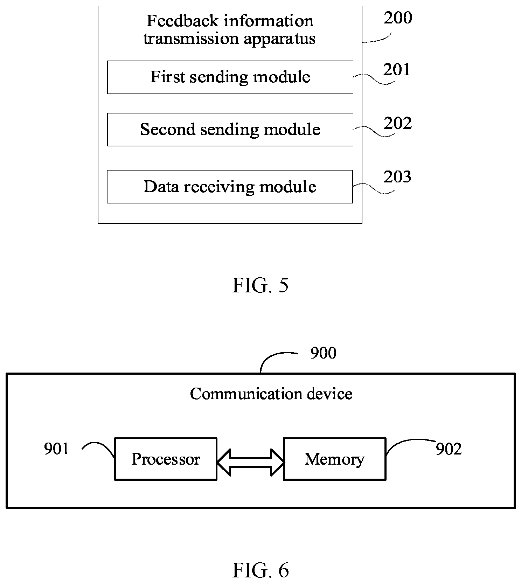

In a fourth aspect, an embodiment of this application provides another feedback information transmission apparatus, and the apparatus is executed by a network-side device. As shown in FIG. 5, the feedback information transmission apparatus 200 includes:
a first sending module 201, configured to send configuration information, where the configuration information is used for indicating at least two sets configured for a terminal, and each set includes at least two physical units;
a second sending module 202, configured to send at least one DCI, where each of the at least one DCI is associated with one set configured for the terminal and is used for jointly scheduling at least two physical units in the associated set; and
a data receiving module 203, configured to receive a HARQ-ACK codebook for the at least one DCI.

The feedback information transmission apparatus provided in this embodiment of this application can implement the processes implemented in the embodiments of the feedback information transmission method according to the second aspect, with the same technical effects achieved. To avoid repetition, details are not described herein again.

Optionally, as shown in FIG. 6, an embodiment of this application further provides a communication device 900, including a processor 901 and a memory 902. The memory 902 stores a program or instructions capable of running on the processor 901. For example, when the communication device 900 is a terminal, the program or instructions are executed by the processor 901 to implement the steps of the embodiments of the feedback information transmission method according to the first aspect, with the same technical effects achieved. When the communication device 900 is a network-side device, the program or instructions are executed by the processor 901 to implement the steps of the embodiments of the feedback information transmission method according to the second aspect, with the same technical effects achieved. To avoid repetition, details are not described herein again.

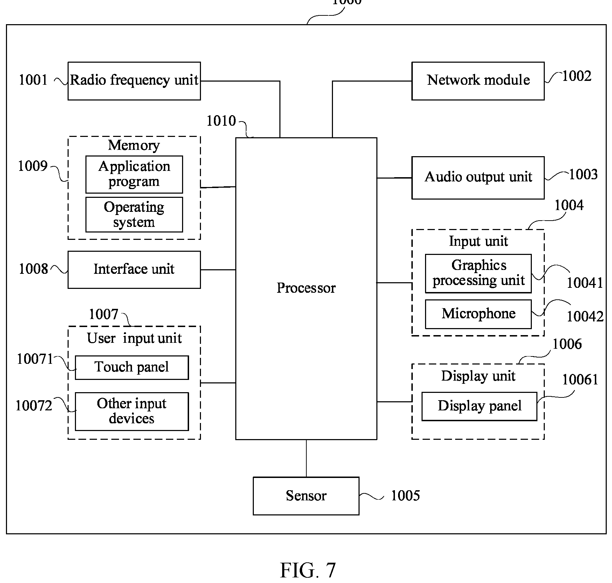

As shown in FIG. 7, FIG. 7 is a schematic diagram of a hardware structure of a terminal for implementing the embodiments of this application.

The terminal 1000 is configured to perform the steps of the embodiments of the feedback information transmission method according to the first aspect, with the same technical effects achieved. The terminal 1000 includes but is not limited to at least part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power supply (for example, a battery) supplying power to the components, and the power supply may be logically connected to the processor 1010 through a power management system. In this way, functions such as charge management, discharge management, and power consumption management are implemented by using the power management system. The structure of the terminal shown in FIG. 7 does not constitute any limitation on the terminal. The terminal may include more or fewer components than shown in the figure, or a combination of some components, or the components disposed differently. Details are not described herein again.

It can be understood that in this embodiment of this application, the input unit 1004 may include a graphics processing unit (Graphics Processing Unit, GPU) 10041 and a microphone 10042. The graphics processing unit 10041 processes image data of a still picture or video obtained by an image capture apparatus (such as a camera) in a video capture mode or an image capture mode. The display unit 1006 may include a display panel 10061, and the display panel 10061 may be configured in a form of a liquid crystal display, an organic light-emitting diode, and the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function key (such as a volume control key or a power on/off key), a trackball, a mouse, a joystick, and the like. Details are not described herein.

In this embodiment of this application, after receiving downlink data from a network-side device, the radio frequency unit 1001 sends the downlink data to the processor 1010 for processing; and the radio frequency unit 1001 also sends uplink data to the network-side device. Generally, the radio frequency unit 1001 includes, but is not limited to, an antenna, an amplifier, a transceiver, a coupler, a low noise amplifier, a duplexer, and the like.

The memory 1009 may be configured to store software programs or instructions and various data. The memory 1009 may mainly include a first storage area for storing programs or instructions and a second storage area for storing data, where the first storage area may store an operating system, an application program or instructions required by at least one function (for example, an audio playing function and an image playing function), and the like. In addition, the memory 1009 may be a volatile memory or a non-volatile memory, or the memory 1009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct memory bus random access memory (Direct Rambus RAM, DRRAM). The memory 1009 described in this embodiment this application includes but is not limited to these and any other suitable types of memories.

The processor 1010 may include one or at least two processing units. Optionally, the processor 1010 integrates an application processor and a modem processor. The application processor mainly processes operations related to an operating system, a user interface, an application program, and the like. The modem processor mainly processes wireless communication signals, for example, a baseband processor. It can be understood that the modem processor may alternatively be not integrated in the processor 1010.

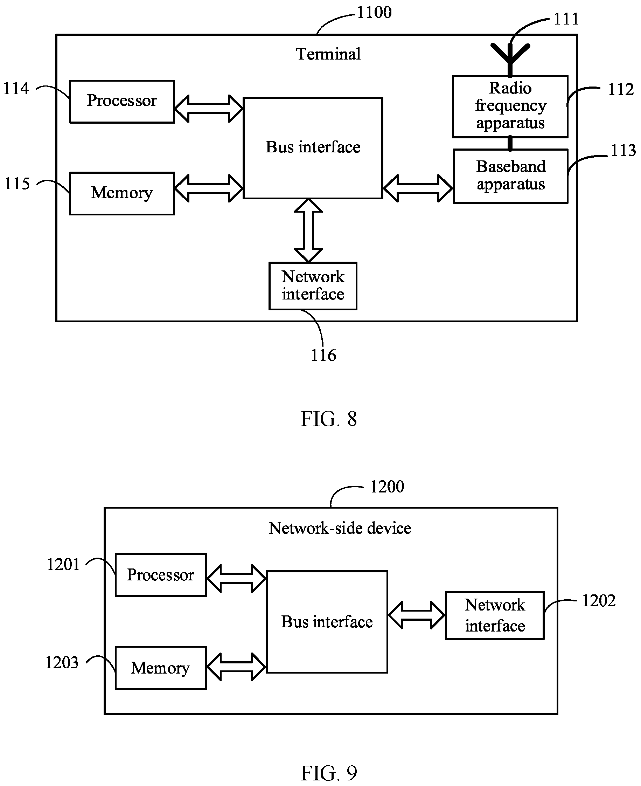

An embodiment of this application further provides a terminal. As shown in FIG. 8, the terminal 1100 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information by using the antenna 111, and sends the received information to the baseband apparatus 113 for processing. In a downlink direction, the baseband apparatus 113 processes to-be-sent information, and sends the information to the radio frequency apparatus 112; and the radio frequency apparatus 112 processes the received information and then sends the information out by using the antenna 111.

The feedback information transmission method performed by the terminal in the foregoing embodiment may be implemented in the baseband apparatus 113, and the baseband apparatus 113 includes a baseband processor.

The baseband apparatus 113 may include, for example, at least one baseband processing unit, where at least two chips are disposed on the baseband processing unit. As shown in FIG. 8, one of the chips is, for example, the baseband processor, and connected to the memory 115 through a bus interface, to invoke the program in the memory 115 to perform the operations of the network device shown in the foregoing embodiments of the feedback information transmission method according to the first aspect.

The terminal may further include a network interface 116, which is, for example, a common public radio interface (Common Public Radio Interface, CPRI).

Specifically, the terminal 1100 in this embodiment of the present invention further includes a program or instructions stored in the memory 115 and capable of running on the processor 114. When the processor 114 invokes the program or instructions in the memory 115, the feedback information transmission method in the first aspect is performed, with the same technical effects achieved. To avoid repetition, details are not described herein again.

An embodiment of this application further provides a network-side device. As shown in FIG. 9, the network-side device 1200 includes a processor 1201, a network interface 1202, and a memory 1203. The network interface 1202 is, for example, a common public radio interface (Common Public Radio Interface, CPRI).

Specifically, the network-side device 1200 in this embodiment of the present invention further includes a program or instructions stored in the memory 1203 and capable of running on the processor 1201. When the processor 1201 invokes the program or instructions in the memory 1203, the feedback information transmission method in the second aspect is performed, with the same technical effects achieved. To avoid repetition, details are not described herein again.

An embodiment of this application further provides a readable storage medium, where a program or instructions are stored in the readable storage medium. When the program or the instructions are executed by a processor, the processes of the foregoing embodiment of the feedback information transmission method can be implemented, with the same technical effects achieved. To avoid repetition, details are not described herein again.

The processor is the processor in the terminal device in the foregoing embodiment. The readable storage medium includes computer readable storage medium, such as computer read-only memory ROM, random access memory RAM, magnetic disk or optical disk, etc. In some examples, the readable storage medium may be a non-transitory readable storage medium.

An embodiment of this application further provides a chip, where the chip includes a processor and a communications interface. The communications interface is coupled to the processor, and the processor is configured to run a program or instructions to implement the processes of the foregoing embodiments of the feedback information transmission method, with the same technical effects achieved. To avoid repetition, details are not described herein again.

It should be understood that the chip mentioned in the embodiments of this application may also be referred to as a system-level chip, a system chip, a chip system, a system-on-chip, or the like.

An embodiment of this application further provides a computer program/program product, where the computer program/program product is stored in a storage medium, and when being executed by at least one processor, the computer program/program product is configured to implement the processes of the foregoing embodiments of the feedback information transmission method, with the same technical effects achieved. To avoid repetition, details are not repeated herein.

An embodiment of this application further provides a feedback information transmission system, including a network-side device and a terminal, where the terminal is configured to perform the steps of the feedback information transmission method according to the first aspect, and the network-side device is configured to perform the steps of the feedback information transmission method according to the second aspect.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. In addition, it should be noted that the scope of the method and the apparatus in the embodiments of this application is not limited to executing the functions in an order shown or discussed, but may also include executing the functions in a substantially simultaneous manner or in a reverse order, depending on the functions involved. For example, the described methods may be performed in an order different from that described, and steps may alternatively be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. However, in many cases, the former is a preferred implementation. Based on such an understanding, the technical solutions of this application essentially or the part contributing to the prior art may be implemented in a form of a software product. The software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms of implementations without departing from the essence of this application and the protection scope of the claims, and all such implementations shall fall within the protection scope of this application.

## Claims

1. A feedback information transmission method, comprising:
receiving, by a terminal, configuration information, wherein the configuration information is used for indicating that at least two sets are configured for the terminal and each set comprises at least two physical units;
receiving, by the terminal, at least one downlink control information DCI, wherein each of the at least one DCI is used for jointly scheduling at least two physical units in one set configured for the terminal;
determining, by the terminal, a quantity of HARQ-ACK bits corresponding to each of the at least one DCI; and
generating and sending, by the terminal, a HARQ-ACK codebook corresponding to the at least one DCI based on the quantity of HARQ-ACK bits corresponding to each of the at least one DCI.

2. The method according to claim 1, wherein the determining, by the terminal, a quantity of HARQ-ACK bits corresponding to each of the at least one DCI comprises:
determining, by the terminal, a same quantity of HARQ-ACK bits for DCIs corresponding to any one set configured for the terminal; or
determining, by the terminal, a respective quantity of HARQ-ACK bits for different DCIs that are corresponding to different sets configured for the terminal.

3. The method according to claim 2, wherein in a case that the terminal receives at least two DCIs, the determining, by the terminal, a same quantity of HARQ-ACK bits comprises:
determining, by the terminal, a same quantity of HARQ-ACK bits for the received at least two DCIs in a case that the received at least two DCIs indicate a same feedback resource; and
in a case that the terminal receives at least two DCIs, the determining, by the terminal, a respective quantity of HARQ-ACK bits for different DCIs that are corresponding to different sets configured for the terminal comprises: in a case that the received at least two DCIs indicate different feedback resources, determining, by the terminal, a respective quantity of HARQ-ACK bits for different DCIs for which different feedback resources are indicated and that are corresponding to different sets configured for the terminal.

4. The method according to claim 2, wherein the determining, by the terminal, a same quantity of HARQ-ACK bits for DCIs corresponding to any one set configured for the terminal comprises:
determining, by the terminal, all combinations of jointly schedulable physical units in the configured at least two sets; and
determining, by the terminal, that quantities of HARQ-ACK bits for all the combinations of jointly schedulable physical units are the same quantity of HARQ-ACK bits.

5. The method according to claim 4, wherein the quantity of HARQ-ACK bits for all the combinations of jointly schedulable physical units is determined based on the following steps:
in a case that all the combinations of jointly schedulable physical units comprise a target physical unit, determining, by the terminal, a maximum quantity of transport blocks TBs that are able to be carried by jointly schedulable physical units in all the combinations of jointly schedulable physical units to be the quantity of HARQ-ACK bits for all the combinations of jointly schedulable physical units, wherein the target physical unit is a physical unit configured with two codewords and not configured with spatial division multiplexing; and
in a case that all the combinations of jointly schedulable physical units do not comprise the target physical unit, determining, by the terminal, a maximum quantity of jointly schedulable physical units in all the combinations of jointly schedulable physical units to be the quantity of HARQ-ACK bits for all the combinations of jointly schedulable physical units.

6. The method according to claim 2, wherein the determining, by the terminal, a same quantity of HARQ-ACK bits for DCIs corresponding to any one set configured for the terminal comprises:
determining, by the terminal, a quantity of HARQ-ACK bits for DCIs respectively corresponding to the configured at least two sets; and
determining, by the terminal, a maximum value of at least two determined quantities of HARQ-ACK bits as the same quantity of HARQ-ACK bits.

7. The method according to claim 2, wherein the determining, by the terminal, a respective quantity of HARQ-ACK bits for different DCIs that are corresponding to different sets configured for the terminal comprises:
for different DCIs that are corresponding to different sets configured for the terminal, determining, by the terminal, indexes of sets corresponding to different DCIs; and
determining, by the terminal based on the indexes of the sets corresponding to different DCIs, the quantity of HARQ-ACK bits for different DCIs corresponding to different sets configured for the terminal.

8. The method according to claim 2, wherein in a case that at least two DCIs received by the terminal indicate a same feedback resource and that the terminal determines the same quantity of HARQ-ACK bits for the DCIs corresponding to any one set configured for the terminal, the generating and sending, by the terminal, a HARQ-ACK codebook corresponding to the at least one DCI comprises:
sequentially cascading, by the terminal based on a value of a first count carried by each DCI in the at least two DCIs indicating the same feedback resource, respective HARQ-ACK bits for the at least two DCIs indicating the same feedback resource, generating one HARQ-ACK codebook corresponding to the received at least two DCIs, and sending, on the same feedback resource, the one HARQ-ACK codebook corresponding to the at least two DCIs.

9. The method according to claim 2, wherein in a case that at least two DCIs corresponding to different sets and received by the terminal indicate a same feedback resource, the generating and sending, by the terminal, HARQ-ACK codebooks corresponding to the at least two DCIs comprises:
based on respective quantities of HARQ-ACK bits for the at least two DCIs corresponding to different sets and indicating the same feedback resource, generating, by the terminal, HARQ-ACK bits for the sets respectively corresponding to the at least two DCIs indicating the same feedback resource, wherein HARQ-ACK bits for one set are obtained by cascading respective HARQ-ACK bits for at least two DCIs corresponding to the set; and
based on target information of different sets corresponding to at least two DCIs indicating the same feedback resource, cascading, by the terminal, HARQ-ACK bits for the sets respectively corresponding to the at least two DCIs indicating the same feedback resource, generating one HARQ-ACK codebook corresponding to the at least two DCIs that correspond to different sets and indicate the same feedback resource, and sending, on the same feedback resource, the one HARQ-ACK codebook corresponding to the at least two DCIs that correspond to different sets and indicate the same feedback resource; wherein
the target information comprises any one of the following:
indexes of sets respectively corresponding to the at least two DCIs that correspond to different sets and indicate the same feedback resource;
an actual quantity of HARQ-ACK bits for the sets respectively corresponding to the at least two DCIs that correspond to different sets and indicate the same feedback resource, wherein an actual quantity of HARQ-ACK bits for one set is determined based on a quantity of physical units jointly schedulable by DCI corresponding to the set; and
reference cell index information of sets respectively corresponding to the at least two DCIs that correspond to different sets and indicate the same feedback resource.

10. The method according to claim 2, wherein in a case that at least two DCIs corresponding to different sets and received by the terminal indicate different feedback resources, the generating and sending, by the terminal, a HARQ-ACK codebook corresponding to the at least one DCI comprises:
based on respective quantities of HARQ-ACK bits for the at least two DCIs corresponding to different sets and indicating different feedback resources, generating, by the terminal, HARQ-ACK bits for the sets respectively corresponding to the DCIs indicating different feedback resources, wherein HARQ-ACK bits for one set are obtained by cascading respective HARQ-ACK bits for at least two DCIs corresponding to the set; and
using, by the terminal, HARQ-ACK bits for the sets respectively corresponding to the at least two DCIs indicating different feedback resources and corresponding to different sets as their respective corresponding HARQ-ACK codebooks, and sending their respective corresponding HARQ-ACK codebooks on respective indicated feedback resources.

11. The method according to claim 9 or 10, wherein any one of the at least two DCIs corresponding to different sets and received by the terminal is first DCI, the first DCI is at least one DCI corresponding to a first set, and HARQ ACK bits for the first set corresponding to the first DCI are generated based on the following steps:
sequentially cascading, by the terminal, HARQ-ACK bits for each DCI in the first DCI based on a value of a second count carried by the first DCI to obtain HARQ-ACK bits for the first set corresponding to the first DCI.

12. The method according to claim 1, wherein in a case that the terminal receives at least two DCIs, the sending, by the terminal, a HARQ-ACK codebook corresponding to the at least one DCI comprises:
in a case that sets corresponding to the at least two DCIs are different sets, or in a case that the sets corresponding to the at least two DCIs comprise a set with different quantities of HARQ-ACK bits for corresponding DCIs, determining, by the terminal from the at least two DCIs according to a predefined rule, at least one DCI for which a HARQ-ACK is preferentially fed back;
determining, by the terminal, HARQ-ACK bits for the at least one DCI for which the HARQ-ACK is preferentially fed back, and generating one HARQ-ACK codebook corresponding to the at least one DCI for which the HARQ-ACK is preferentially fed back; and
sending, by the terminal, the HARQ-ACK codebook corresponding to the at least one DCI for which the HARQ-ACK is preferentially fed back.

13. The method according to claim 12, wherein the method further comprises:
sending, by the terminal, remaining HARQ-ACK bits for the DCI after a predefined time elapses after the terminal sends the HARQ-ACK codebook corresponding to the at least one DCI for which the HARQ-ACK is preferentially fed back; or
sending, by the terminal, remaining HARQ-ACK bits for the DCI based on DCI that is received after sending of the HARQ-ACK codebook corresponding to the at least one DCI for which the HARQ-ACK is preferentially fed back.

14. The method according to claim 12, wherein the predefined rule comprises at least one of the following:
the DCI for which the HARQ-ACK is preferentially fed back is DCI corresponding to a set with a largest quantity of HARQ-ACK bits;
the DCI for which the HARQ-ACK is preferentially fed back is DCI corresponding to a set that comprises a largest quantity of jointly schedulable physical units; and
the DCI for which the HARQ-ACK is preferentially fed back is DCI corresponding to a set with a largest actual quantity of HARQ-ACK bits, wherein an actual quantity of HARQ-ACK bits for one set is determined based on a quantity of physical units jointly schedulable by DCI corresponding to the set.

15. The method according to claim 1, wherein in a case that the terminal receives at least two DCIs, the sending, by the terminal, a HARQ-ACK codebook corresponding to the at least one DCI comprises:
determining, by the terminal, respective priorities of the at least two DCIs in a case that the at least two DCIs correspond to different sets and the at least two DCIs indicate a same feedback resource; and
sending, by the terminal, a HARQ-ACK codebook corresponding to DCI with a higher priority.

16. The method according to claim 15, wherein the determining, by the terminal, respective priorities of the at least two DCIs based on at least one of the following comprises:
an actual quantity of HARQ-ACK bits respectively corresponding to the at least two DCIs, wherein an actual quantity of HARQ-ACK bits for one DCI is determined based on a quantity of physical units jointly schedulable by the DCI;
priorities respectively configured for the at least two DCIs;
data transmission priorities respectively indicated by the at least two DCIs; and
respective SCSs for the at least two DCIs.

17. The method according to claim 2, wherein in a case that one DCI is received, the generating and sending, by the terminal, a HARQ-ACK codebook corresponding to the at least one DCI based on the quantity of HARQ-ACK bits corresponding to each of the at least one DCI comprises:
determining, by the terminal, the same quantity of HARQ-ACK bits as a quantity of HARQ-ACK bits for the received one DCI, or determining, by the terminal, a quantity of HARQ-ACK bits for the received one DCI based on a set corresponding to the received one DCI; and
generating, by the terminal, a HARQ-ACK codebook corresponding to the DCI based on the quantity of HARQ-ACK bits, and sending the HARQ-ACK codebook corresponding to the DCI on a feedback resource indicated by the DCI.

18. The method according to any one of claims 1 to 17, wherein the physical unit is any one of the following:
a cell;
a bandwidth part BWP;
a resource pool; and
a physical downlink shared channel PDSCH.

19. A feedback information transmission method, comprising:
sending, by a network-side device, configuration information, wherein the configuration information is used for indicating at least two sets configured for a terminal, and each set comprises at least two physical units;
sending, by the network-side device, at least one DCI, wherein each of the at least one DCI is associated with one set configured for the terminal and is used for jointly scheduling at least two physical units in the associated set; and
receiving, by the network-side device, a HARQ-ACK codebook corresponding to the at least one DCI.

20. A feedback information transmission apparatus, which is executed by a terminal, and the apparatus comprises:
a first receiving module, configured to receive configuration information, wherein the configuration information is used for indicating that at least two sets are configured for the terminal and each set comprises at least two physical units;
a second receiving module, configured to receive at least one downlink control information DCI, wherein each of the at least one DCI is used for jointly scheduling at least two physical units in one set configured for the terminal;
a first processing module, configured to determine a quantity of HARQ-ACK bits corresponding to each of the at least one DCI; and
a second processing module, configured to generate and send a HARQ-ACK codebook corresponding to the at least one DCI based on the quantity of HARQ-ACK bits corresponding to each of the at least one DCI.

21. A feedback information transmission apparatus, which is executed by a network-side device, and the apparatus comprises:
a first sending module, configured to send configuration information, wherein the configuration information is used for indicating at least two sets configured for a terminal, and each set comprises at least two physical units;
a second sending module, configured to send at least one DCI, wherein each of the at least one DCI is associated with one set configured for the terminal and is used for jointly scheduling at least two physical units in the associated set; and
a data receiving module, configured to receive a HARQ-ACK codebook for the at least one DCI.

22. A terminal, comprising a processor and a memory, wherein the memory stores a program or instructions capable of running on the processor, and when the program or instructions are executed by the processor, the steps of the feedback information transmission method according to any one of claims 1 to 18 are implemented.

23. A network-side device, comprising a processor and a memory, wherein the memory stores a program or instructions capable of running on the processor, and when the program or instructions are executed by the processor, the steps of the feedback information transmission method according to claim 19 are implemented.
